# EUROPÄISCHE PATENTSCHRIFT

(11) **EP 3 275 709 B1**
(45) Veröffentlichungstag und Bekanntmachung des Hinweises auf die Patenterteilung: **12.12.2018**
(21) Anmeldenummer: 17179161.9
(22) Anmeldetag: 30.06.2017
(51) Int. Cl.: B60J 7/02

(54) **FÜHRUNGSSCHIENENPROFIL FÜR EIN SCHIEBEDACHSYSTEM EINES KRAFTFAHRZEUGS UND SCHIEBEDACHSYSTEM**
GUIDE RAIL PROFILE FOR A SLIDING ROOF SYSTEM OF A MOTOR VEHICLE AND SLIDING ROOF SYSTEM
PROFIL DE RAIL DE GUIDAGE POUR UN SYSTÈME DE TOIT OUVRANT D'UN VÉHICULE AUTOMOBILE ET SYSTÈME DE TOIT OUVRANT

(30) Priorität: 27.07.2016 DE 102016213823
(43) Veröffentlichungstag der Anmeldung: 31.01.2018
(73) Patentinhaber: BOS GmbH & Co. KG, 73760 Ostfildern (DE)
(72) Erfinder: Heidan, Michael, 70569 Stuttgart (DE)
(74) Vertreter: Patentanwälte Ruff, Wilhelm, Beier, Dauster & Partner mbB

(56) Entgegenhaltungen:
- DE-A1-102013 020 141
- DE-B4-102009 025 122

## Beschreibung

Die Erfindung betrifft ein Führungsschienenprofil für ein Schiebedachsystem eines Kraftfahrzeugs, wobei das Führungsschienenprofil einen Befestigungsabschnitt mit mehreren Befestigungsdomen zur Verbindung des Führungsschienenprofils mit einem fahrzeugfesten Dachbereich sowie einen - in Längsrichtung des Führungsschienenprofils gesehen - parallel zu dem Befestigungsabschnitt verlaufenden Wasserrinnenabschnitt aufweist, an den - in Querrichtung des Führungsschienenprofils gesehen - ein Führungsabschnitt zur Führung einer Steuerkinematik für ein bewegliches Dachteil anschließt, wobei der Befestigungsabschnitt mit einstückig ausgeformten Versteifungen versehen ist.

Die Erfindung betrifft zudem ein Schiebedachsystem eines Kraftfahrzeugs mit einem derartigen Führungsschienenprofil.

Ein Schiebedachsystem ist aus der DE 10 2009 025 122 B4 bekannt. Das bekannte Schiebedachsystem weist eine Führungsschiene auf, die mit einem Befestigungsabschnitt versehen ist, mittels dessen die Führungsschiene mit einem fahrzeugfesten Dachbereich des Kraftfahrzeugs verbunden werden kann. An den Führungsabschnitt schließt - in Fahrzeugquerrichtung gesehen - ein Wasserrinnenabschnitt an, zu dem ein Führungsabschnitt benachbart ist, der zur Führung einer Steuerkinematik für ein bewegliches Dachteil des Schiebedachsystems dient. In dem Befestigungsabschnitt ist mindestens eine Sicke angeordnet, um den Befestigungsabschnitt zu versteifen.

In der DE 10 2013 020 141 A1 ist ein Führungsschienenprofil für ein bewegliches Element eines Fahrzeugdachs beschrieben. Dieses Führungsschienenprofil weist einen Befestigungsabschnitt zur Befestigung des Führungsschienenprofils an einem Querträger des Fahrzeugs auf.

Aufgabe der Erfindung ist es, ein Führungsschienenprofil und ein Schiebedachsystem der eingangs genannten Art zu schaffen, die eine verbesserte Funktion gegenüber dem Stand der Technik ermöglichen.

Diese Aufgabe wird für das Führungsschienenprofil durch die Merkmale des Anspruchs 1 gelöst. Für das Schiebedachsystem wird die Aufgabe durch die Merkmale des Anspruchs 2 gelöst. Dadurch wird eine erhöhte Steifigkeit des Führungsschienenprofils quer zur Längsrichtung des Führungsschienenprofils insbesondere auf Höhe der Befestigungsdome erreicht. Hierdurch ist eine erhöhte Stabilität einer Verbindung zwischen dem Schiebedachsystem und dem fahrzeugfesten Dachbereich des Kraftfahrzeugs erzielbar. Die erhöhte Steifigkeit führt zu besseren Führungs- und Laufeigenschaften für die Steuerkinematik, die das bewegliche Dachteil verlagert. Die erfindungsgemäße Lösung eignet sich in besonders vorteilhafter Weise für den Einsatz bei Personenkraftwagen. Ein erfindungsgemäßes Schiebedachsystem kann jedoch auch bei anderen Kraftfahrzeugen zu Wasser, zu Luft und zu Lande eingesetzt werden. Ein Einsatz des erfindungsgemäßen Schiebedachsystems ist in gleicher Weise bei gezogenen Fahrzeugen wie insbesondere Wohnanhängern oder Eisenbahnwaggons möglich.

In Ausgestaltung der Erfindung ist als Versteifung wenigstens eine zusätzliche Auswölbung im Wasserrinnenabschnitt ausgebildet, die in Längsrichtung versetzt zu den Befestigungsdomen vorgesehen ist. Die zusätzliche Auswölbung ist ebenfalls einstückig im Führungsschienenprofil ausgebildet und versteift das Führungsschienenprofil weiter.

In weiterer Ausgestaltung der Erfindung ist die Versteifung im Bereich wenigstens eines Befestigungsdoms als Ausprägung gestaltet, die kontinuierlich in einen Seitenwandbereich des Wasserrinnenabschnitts nach unten gezogen ist. Die Ausprägung stellt eine Kaltumformung des Führungsschienenprofils dar. Das Führungsschienenprofil ist vorzugsweise aus einer Leichtmetalllegierung hergestellt und insbesondere als Strangpressprofil gestaltet. Alternativ ist das Führungsschienenprofil aus einer ebenen Metallplatte durch Stanz-/Biegetechnik hergestellt. In letzterem Fall kann in einem Arbeitsgang mit der Stanz-/Biegetechnik auch bereits die wenigstens eine Ausprägung gebildet werden.

In Ausgestaltung der Erfindung ist die Ausprägung von dem Befestigungsdom ausgehend über den Seitenwandbereich bis in einen Bodenbereich des Wasserrinnenabschnitts hinein erstreckt. Damit erstreckt die Ausprägung sich kontinuierlich vom Befestigungsdom über eine gesamte Höhe des Seitenwandbereichs bis in den Bodenbereich des Wasserrinnenabschnitts.

In weiterer Ausgestaltung der Erfindung sind die wenigstens eine Auswölbung sowie die wenigstens eine Ausprägung relativ zu einer Oberseite des Führungsschienenprofils nach oben ausgeformt. Durch die Ausformung nach oben ist gewährleistet, dass im Wasserrinnenabschnitt keine Wasserreste verbleiben können. Bei Sicken gemäß dem Stand der Technik, die nach innen verlaufende Einwölbungen bilden, können Wasserreste in diesen Einwölbungen verbleiben, die zu Feuchtigkeits- oder Korrosionsproblemen führen können.

In weiterer Ausgestaltung der Erfindung weist die wenigstens eine Ausprägung und/oder die wenigstens eine Auswölbung in Randbereichen mit größerer Querschnittskrümmung eine größere Materialstärke auf als in Übergangsbereichen mit geringerer Querschnittskrümmung. Diese Ausgestaltung ist durch einen Prägevorgang mit einem Prägestempel und einem von entgegengesetzter Richtung auf das Führungsschienenprofil wirkenden Gegenstempel realisierbar. Hierdurch wird die Steifigkeit des Führungsschienenprofils im Bereich der Ausprägung und/oder der Auswölbung weiter verbessert.

In weiterer Ausgestaltung der Erfindung ist die Ausprägung über wenigstens einen Längskantenbereich des Führungsschienenprofils hinweg erstreckt. Hierdurch wird eine zusätzliche Versteifung des entsprechenden Längskantenbereichs des Führungsschienenprofils erzielt.

In weiterer Ausgestaltung der Erfindung verjüngt die Ausprägung sich ausgehend von dem Befestigungsdom in Richtung des Bodenbereichs des Wasserrinnenabschnitts. Unter der Verjüngung ist eine kontinuierliche Verringerung der Breite der Ausprägung über den Verlauf der Ausprägung in Fahrzeughochrichtung zu verstehen. Die Ausprägung wird ausgehend von einem breiten Bereich auf Höhe des Befestigungsdoms über den Seitenwandbereich nach unten zum Bodenbereich hin kontinuierlich immer schmäler.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform eines erfindungsgemäßen Schiebedachsystems,
- Fig. 2: in perspektivischer Darstellung eine Ausführungsform eines erfindungsgemäßen Führungsschienenprofils des Schiebedachsystems nach Fig. 1 und
- Fig. 3: das Führungsschienenprofil nach Fig. 2 in anderer perspektivischer Darstellung.

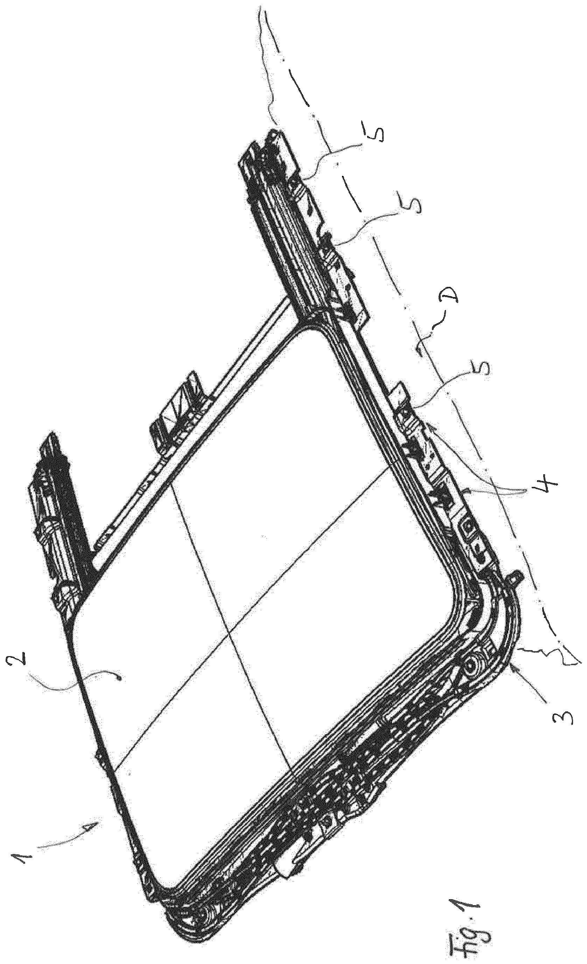

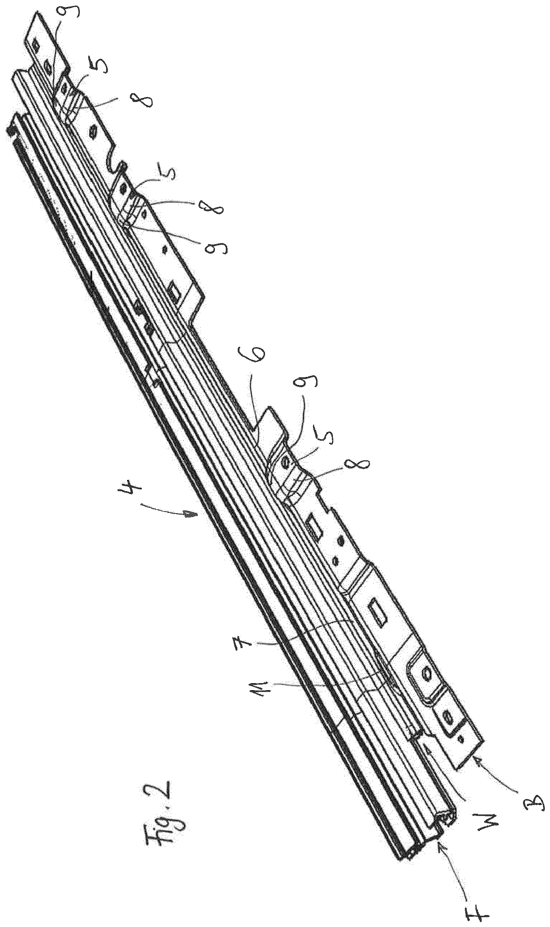

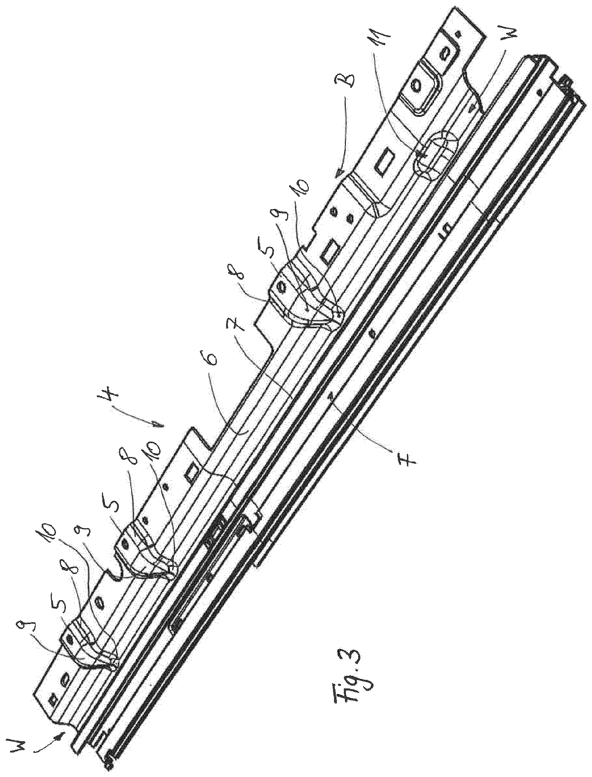

Ein Personenkraftwagen weist einen Dachbereich D auf, der in Fig. 1 angedeutet ist. Dieser Dachbereich D ist mit einem Dachausschnitt versehen, in den ein Schiebedachsystem 1 eingepasst ist. Das Schiebedachsystem 1 weist einen Trägerrahmen 3 auf, der an seinen in Fahrzeuglängsrichtung gesehenen Längsseiten mit jeweils einem Führungsschienenprofil 4 versehen ist. Das jeweilige Führungsschienenprofil 4 weist mehrere über die Länge des Führungsschienenprofils 4 verteilt angeordnete Befestigungsdome 5 auf, über die der Trägerrahmen 3 mit dem Dachbereich D fest verbunden wird. Hierzu sind nicht dargestellte Befestigungsmittel in Form von Schraubverbindungen, Nietverbindungen, Schweißverbindungen oder Klebeverbindungen vorgesehen. Bei der Ausführungsform gemäß den Fig. 1 bis 3 sind als Befestigungsmittel Schraubverbindungen vorgesehen. Hierzu weisen die Befestigungsdome 5 entsprechende Befestigungslöcher auf, die anhand der Fig. 2 und 3 gezeigt, jedoch nicht näher bezeichnet sind.

Das Schiebedachsystem 1 ist mit einem beweglichen Dachteil 2 versehen, das mittels einer nicht näher dargestellten Steuerkinematik entlang der Führungsschienenprofile 4 zwischen einer in Fig. 1 dargestellten Schließstellung, einer Lüfterstellung sowie einer Offenstellung verlagerbar ist.

Das Führungsschienenprofil 4 auf jeder Seite des Trägerrahmens 3 ist jeweils als metallisches Strangpressprofil aus einer Leichtmetalllegierung hergestellt, das zusätzlich durch Kaltumformung weiter bearbeitet ist. Ergänzend ist das Führungsschienenprofil 4 durch Trennen bearbeitet, um Löcher, Aussparungen, Schlitze und Ähnliches vorzusehen. Das Führungsschienenprofil 4 weist auf einer dem Dachteil 2 zugewandten Längsseite einen Führungsabschnitt F auf, der als Hohlprofilabschnitt ausgeführt ist, um verschiedene Funktionsteile der Steuerkinematik zur Verlagerung des Dachteils 2 führen zu können. An den Führungsabschnitt F schließt - in Fahrzeugquerrichtung - nach außen ein Wasserrinnenabschnitt W an, der rinnenförmig gestaltet ist und einen Bodenbereich 7 sowie zwei Seitenwandbereiche aufweist, von denen ein Seitenwandbereich 6 einstückig in einen Befestigungsabschnitt B übergeht, der parallel zu dem Wasserrinnenabschnitt W auf einer zum Führungsabschnitt F gegenüberliegenden Längsseite des Wasserrinnenabschnitts W verläuft. Der Wasserrinnenabschnitt W und der Befestigungsabschnitt B gehen einstückig ineinander über. Das Führungsschienenprofil 4 ist als einteiliges Bauteil gestaltet, in dem der Führungsabschnitt F, der Wasserrinnenabschnitt W und der Befestigungsabschnitt B einstückig integriert sind. Bei einem nicht dargestellten Ausführungsbeispiel der Erfindung ist der Führungsabschnitt F als separates Strangpresshohlprofil hergestellt und der Wasserrinnenabschnitt W und der Befestigungsabschnitt B sind als weiteres Blechbiegeteil separat zum Führungsabschnitt F hergestellt und nach der Fertigstellung über eine gesamte Länge des Führungsabschnitts F fest mit dem Führungsabschnitt F verbunden. Nach einer Montage des Blechbauteils aus Wasserrinnenabschnitt W und Befestigungsabschnitt B an dem Führungsabschnitt F ist das so gebildete Führungsschienenprofil 4 demzufolge ebenso als einheitliches und formstabiles Bauteil handhabbar.

Der Befestigungsabschnitt B weist drei Befestigungsdome 5 auf, die über eine Länge des Befestigungsabschnitts B verteilt angeordnet sind. Die Befestigungsdome 5 werden jeweils gebildet durch eine domförmige Ausprägung des Befestigungsabschnitts B nach oben. Die Ausprägung wird gebildet durch eine domartige Wölbung 8 im Bereich der Oberseite des Befestigungsabschnitts B, die sich zum Seitenwandbereich 6 des Wasserrinnenabschnitts W kontinuierlich fortsetzt in eine - in der Draufsicht auf den Seitenwandbereich 6 gesehen - trapezförmige Ausbuchtung 9, die mittels eines unteren Übergangsbereichs 10 sich in den Bodenbereich 7 des Wasserrinnenabschnitts W fortsetzt und dort in eine ebene Bodenfläche des Bodenbereichs 7 ausläuft. Die Ausbuchtung 9 verjüngt sich keilartig zum Bodenbereich 7 des Wasserrinnenabschnitts W hin. Die Ausprägung ist so gebildet, dass sich zwischen der Wölbung 8 und der Ausbuchtung 9 ein domförmig gewölbter und gekrümmter Übergang ergibt. Die Ausbuchtung 9 geht in den Übergangsbereich 10 über durch eine konkave Einwölbung. Details zur Gestaltung der Ausprägung im Bereich des jeweiligen Befestigungsdoms 5 sind der Fig. 3 gut zu entnehmen. Eine Wandungsstärke des Führungsschienenprofils 4 ist über den gesamten Befestigungsabschnitt B und den Wasserrinnenabschnitt W einschließlich der Bereiche der Ausprägungen an den Befestigungsdomen 5 zumindest weitgehend gleich gehalten. Anhand der Fig. 3 ist erkennbar, dass die Ausprägungen 8 bis 10 im Bereich der Befestigungsdome 5 wasserfallähnlich von einer Oberseite des Befestigungsabschnitts 5 ausgehend über den Seitenwandbereich 6 zum Bodenbereich 7 des Wasserrinnenabschnitts W "fließen". Dabei erstreckt sich die jeweilige Ausprägung zum einen über einen nicht näher bezeichneten Längskantenbereich, der einen oberen Randbereich des Seitenwandbereichs 6 bildet, und zum anderen über einen unteren Längskantenbereich des Wasserrinnenabschnitts W, der einen Übergang zwischen dem Seitenwandbereich 6 und dem Bodenbereich 7 des Wasserrinnenabschnitts W bildet.

Ergänzend weist das Führungsschienenprofil 4 im Bereich des Wasserrinnenabschnitts W noch eine weitere Versteifung in Form einer Auswölbung 11 auf, die in Längsrichtung axial versetzt zu den Befestigungsdomen 5 angeordnet ist und einstückig in dem Seitenwandbereich 6 ausgeformt ist. Die Auswölbung 11 erstreckt sich über nahezu eine gesamte Höhe des Seitenwandbereichs 6 und setzt sich über den unteren Längskantenbereich bis in den Bodenbereich 7 des Wasserrinnenabschnitts W fort. Die Auswölbung 11 ragt über eine Oberfläche des Seitenwandbereichs 6 höckerartig nach oben und zum Führungsabschnitt F hin ab, wobei Übergangsbereiche zu ebenen Flächen des Seitenwandbereichs 6 und des Bodenbereichs 7 konkavförmig gekrümmt sind, um einen stetigen und kontinuierlichen Übergang zur jeweils ebenen Oberfläche des Bodenbereichs 7 und des Seitenwandbereichs 6 zu erzielen.

## Patentansprüche

1. Führungsschienenprofil für ein Schiebedachsystem eines Kraftfahrzeugs, wobei das Führungsschienenprofil (4) einen Befestigungsabschnitt (B) mit mehreren Befestigungsdomen (5) zur Verbindung des Führungsschienenprofils (4) mit einem fahrzeugfesten Dachbereich (D) sowie einen - in Längsrichtung des Führungsschienenprofils (4) gesehen - parallel zu dem Befestigungsabschnitt (B) verlaufenden Wasserrinnenabschnitt (W) aufweist, an den - in Querrichtung des Führungsschienenprofils (4) gesehen - ein Führungsabschnitt (F) zur Führung einer Steuerkinematik für ein bewegliches Dachteil (2) anschließt, wobei der Befestigungsabschnitt (B) mit einstückig ausgeformten Versteifungen (8 bis 11) versehen ist, **dadurch gekennzeichnet, dass** die Versteifungen (8 bis 10) an den Befestigungsdomen (5) ausgebildet sind und in Querrichtung des Führungsschienenprofils (4) kontinuierlich fortgesetzt bis in den Wasserrinnenabschnitt (W) hinein erstreckt sind.

2. Schiebedachsystem eines Kraftfahrzeugs mit einem Führungsschienenprofil (4) gemäß Anspruch 1.

3. Schiebedachsystem nach Anspruch 2, **dadurch gekennzeichnet**, das als Versteifung wenigstens eine zusätzliche Auswölbung (11) im Wasserrinnenabschnitt (W) ausgebildet ist, die in Längsrichtung versetzt zu den Befestigungsdomen (5) vorgesehen ist.

4. Schiebedachsystem nach Anspruch 2 oder 3, **dadurch gekennzeichnet, dass** die Versteifung an wenigstens einem Befestigungsdom (5) als Ausprägung (8 bis 10) gestaltet ist, die kontinuierlich in einen Seitenwandbereich (6) des Wasserrinnenabschnitts (W) nach unten gezogen ist.

5. Schiebedachsystem nach Anspruch 4, **dadurch gekennzeichnet, dass** die Ausprägung (8 bis 10) von dem Befestigungsdom ausgehend über den Seitenwandbereich (6) bis in einen Bodenbereich (7) des Wasserrinnenabschnitts (W) hinein erstreckt ist.

6. Schiebedachsystem nach einem der vorhergehenden Ansprüche, **dadurch gekennzeichnet, dass** die wenigstens eine Auswölbung (11) sowie die wenigstens eine Ausprägung (8 bis 10) relativ zu einer Oberseite des Führungsschienenprofils (4) nach oben ausgeformt sind.

7. Schiebedachsystem nach Anspruch 6, **dadurch gekennzeichnet, dass** die wenigstens eine Ausprägung (8 bis 10) und/oder die wenigstens eine Auswölbung (11) in Randbereichen mit größerer Querschnittskrümmung eine größere Materialstärke aufweist als in Übergangsbereichen mit geringerer Querschnittskrümmung.

8. Schiebedachsystem nach einem der vorhergehenden Ansprüche, **dadurch gekennzeichnet, dass** die Ausprägung (8 bis 10) über wenigstens einen Längskantenbereich des Führungsschienenprofils (4) hinweg erstreckt ist.

9. Schiebedachsystem nach einem der vorhergehenden Ansprüche, **dadurch gekennzeichnet, dass** die Ausprägung (8 bis 10) sich ausgehend von dem Befestigungsdom (5) in Richtung des Bodenbereichs (7) des Wasserrinnenabschnitts (W) verjüngt.

## Claims

1. Guiding rail profile for a sliding roof system of an automotive vehicle, the guiding rail profile (4) including a fastening section (B) with a plurality of mounting domes (5) for connecting the guiding rail profile (4) to a vehicle-fixed roof portion (D) and - as seen in the longitudinal direction of the guiding rail profile (4) - a water drainage section (W) extending in parallel to the fastening section (B), which water drainage section is adjoined - as seen in the transverse direction of the guiding rail profile (4) - by a guiding section (F) to guide control kinematics for a movable roof part (2), wherein the fastening section (B) is provided with integrally formed stiffening reinforcements (8 to 11),
**characterized in that**
the stiffening reinforcements (8 to 10) are provided on the mounting domes (5) and extend in the transverse direction of the guiding rail profile (4) continuously into the water drainage section (W).

2. Sliding roof system of an automotive vehicle with a guiding rail profile (4) according to claim 1.

3. Sliding roof system according to claim 2, **characterized in that** at least one additional outward arcuate feature (11) is formed in the water drainage section (W) as a stiffening reinforcement which is provided in the longitudinal direction offset in relation to the mounting domes (5).

4. Sliding roof system according to claim 2 or 3, **characterized in that** the stiffening reinforcement is designed as an outward embossing feature (8 to 10) on at least one mounting dome (5), which embossing is continuously drawn downwards in a side wall region (6) of the water drainage section (W).

5. Sliding roof system according to claim 4, **characterized in that** the outward embossing feature (8 to 10) extends starting from the mounting dome across the side wall region (6) into a bottom region (7) of the water drainage section (W).

6. Sliding roof system according to any of the preceding claims, **characterized in that** the at least one outward arcuate feature (11) and the at least one outward embossing feature (8 to 10) are shaped upwards relative to an upper side of the guiding rail profile (4).

7. Sliding roof system according to claim 6, **characterized in that** the at least one outward embossing feature (8 to 10) and/or the at least one outward arcuate feature (11) have a greater material thickness in border areas of greater cross sectional curvature than in transition areas of lesser cross sectional curvature.

8. Sliding roof system according to any of the preceding claims, **characterized in that** the outward embossing feature (8 to 10) extends across at least one longitudinal edge region of the guiding rail profile (4).

9. Sliding roof system according to any of the preceding claims, **characterized in that** the outward embossing feature (8 to 10) tapers starting from the mounting dome (5) in the direction towards the bottom region (7) of the water drainage section (W).

## Revendications

1. Profil de rail de guidage pour un système de toit ouvrant d'un véhicule automobile, le profil de rail de guidage (4) comportant une section de fixation (B) avec plusieurs dômes de fixation (5) pour raccorder le profil de rail de guidage (4) à une région de toit (D) fixée au véhicule ainsi que - vu dans la direction longitudinale du profil de rail de guidage (4) - une section de drainage des eaux (W) s'étendant en parallèle à la section de fixation (B), à laquelle s'aligne - vu dans la direction transversale du profil de rail de guidage (4) - une section de guidage (F) pour guider une cinématique de commande pour une partie du toit (2) mobile, la section de fixation (B) étant pourvue de renforcements raidisseurs (8 à 11) moulés intégralement,
**caractérisé en ce que**
les renforcements raidisseurs (8 à 10) sont formés sur les dômes de fixation (5) et s'étendent dans la direction transversale du profil de rail de guidage (4) en continu jusque dans la section de drainage des eaux (W).

2. Système de toit ouvrant d'un véhicule automobile avec un profil de rail de guidage (4) selon la revendication 1.

3. Système de toit ouvrant selon la revendication 2, **caractérisé en ce que**, en tant que renforcement raidisseur, au moins une voûte supplémentaire (11) est formée dans la section de drainage des eaux (W), ladite voûte ménagée dans la direction longitudinale décalée par rapport aux dômes de fixation (5).

4. Système de toit ouvrant selon la revendication 2 ou 3, **caractérisé en ce que** le renforcement raidisseur est configuré sur au moins un dôme de fixation (5) sous forme d'embossage (8 à 10), ledit embossage étiré vers le bas en continu dans une région de paroi latérale (6) de la section de drainage des eaux (W).

5. Système de toit ouvrant selon la revendication 4, **caractérisé en ce que** l'embossage (8 à 10) s'étend à partir du dôme de fixation à travers la région de paroi latérale (6) jusque dans une région du fond (7) de la section de drainage des eaux (W).

6. Système de toit ouvrant selon l'une quelconque des revendications précédentes, **caractérisé en ce que** l'au moins une voûte (11) ainsi que l'au moins un embossage (8 à 10) sont formés vers le haut par rapport à une face supérieure du profil de rail de guidage (4).

7. Système de toit ouvrant selon la revendication 6, **caractérisé en ce que** l'au moins un embossage (8 à 10) et/ou l'au moins une voûte (11) présentent/présente une épaisseur du matériau plus grande dans des régions marginales de courbure transversale plus grande que dans des régions de transition de courbure transversale moins grande.

8. Système de toit ouvrant selon l'une quelconque des revendications précédentes, **caractérisé en ce que** l'embossage (8 à 10) s'étend à travers au moins une région de bord longitudinal du profil de rail de guidage (4).

9. Système de toit ouvrant selon l'une quelconque des revendications précédentes, **caractérisé en ce que** l'embossage (8 à 10) s'amincit à partir du dôme de fixation (5) en direction vers la région du fond (7) de la section de drainage des eaux (W).
